# EUROPÄISCHE PATENTSCHRIFT

(11) **EP 3 359 314 B1**
(45) Veröffentlichungstag und Bekanntmachung des Hinweises auf die Patenterteilung: **04.03.2020**
(21) Anmeldenummer: 16777970.1
(22) Anmeldetag: 03.10.2016
(51) Int. Cl.: B21D 1/02, B21D 1/05

(54) **VERFAHREN UND VORRICHTUNG ZUM HERSTELLEN EINES METALLBANDS MIT WEITGEHEND PARALLELEN BANDKANTEN**
METHOD AND DEVICE FOR PRODUCING A METAL STRIP WITH SUBSTANTIALLY PARALLEL STRIP EDGES
PROCÉDÉ ET DISPOSITIF DE FABRICATION D'UNE BANDE MÉTALLIQUE AUX RIVES LARGEMENT PARALLÈLES

(30) Priorität: 07.10.2015 AT 508542015
(43) Veröffentlichungstag der Anmeldung: 15.08.2018
(73) Patentinhaber: Berndorf Band GmbH, 2560 Berndorf (AT)
(72) Erfinder: SCHUSTER, Roland, 2560 Berndorf (AT)
(74) Vertreter: Burger, Hannes
(86) Internationale Anmeldenummer: PCT/EP2016/073535
(87) Internationale Veröffentlichungsnummer: WO 2017/060181

(56) Entgegenhaltungen:
- WO-A1-2004/044257
- AT-A4- 511 947
- DE-A1-102008 010 062
- JP-A- S 551 987
- US-A- 3 457 752
- US-A- 3 722 251

## Beschreibung

Die Erfindung betrifft ein Verfahren zum Herstellen eines Metallbands mit weitgehend parallelen Bandkanten gemäß dem Oberbegriff des Anspruchs 1. Weiterhin betrifft die Erfindung eine Vorrichtung gemäß dem Oberbegriff des Anspruchs 12.

Solch ein Verfahren und solch eine Vorrichtung sind zum Beispiel in der US-A-3457752 offenbart.

Die genannten Metallbänder werden für bestimmte Einsatzzwecke mit einer sehr hohen Oberflächengüte hergestellt und werden nach dem Besäumen noch geschliffen oder sogar hochglanzpoliert. Diese Metallbänder werden zum Beispiel für die Herstellung plattenförmiger oder filmartiger Werkstoffe eingesetzt, insbesondere für Filme für die Fotografie, LCD-Bildschirme oder aber für Kunststein ("Engineered Stone") und für die Herstellung von Holzwerkstoffen (z.B. von Pressspanplatten, Laminaten und dergleichen). Dabei wird ein flüssiger oder pastöser Werkstoff auf ein angetriebenes/bewegtes Band aufgetragen und der zumindest teilweise erstarrte Werkstoff abgehoben. Damit das Metallband, welches beispielsweise in einer Bandgießanlage oder einer Doppelbandpresse eingesetzt wird, gerade läuft, sollten die Bandkanten parallel und gleich lang sein.

Vorrichtungen und Verfahren der eingangs genannten Art sind grundsätzlich bekannt. Dabei wird das Metallband mit Hilfe eines Antriebs an einem auf einem Maschinentisch montiertem Besäumwerkzeug, beispielsweise einem fix auf diesem montierten Messer, vorbeigezogen. Auf diese Weise können Metallbänder, deren Ränder im Rohzustand nicht notwendigerweise parallel verlaufen, beziehungsweise die zum Teil auch Grate aufweisen, auf eine gewünschte Breite geschnitten und dessen Kanten gebrochen beziehungsweise abgerundet werden. Dieser Vorgang wird als "Besäumen" bezeichnet. Dabei ist anzumerken, dass das Abfasen oder Abrunden der Kanten nicht notwendigerweise integraler Bestandteil des Besäumvorgangs ist. Im Grunde ist dazu das Bearbeiten eines Metallbandes mit dem Ziel, dieses auf eine vorgegebenen Breite mit im Wesentlichen parallelen Kanten zu bringen, ausreichend.

Beispielsweise offenbart die AT 511 947 A4 dazu auch eine Vorrichtung zum Besäumen eines Metallbandes, welche einen Maschinentisch mit einer Haltevorrichtung zum Halten des Metallbandes sowie ein erstes in einer Längsrichtung verfahrbares Besäumwerkzeug umfasst. Des Weiteren umfasst die Vorrichtung ein zweites, vom ersten Besäumwerkzeug beabstandetes Besäumwerkzeug, welches synchron mit dem ersten Besäumwerkzeug in der besagten Längsrichtung verfahrbar ist.

Nachteilig an den bekannten Verfahren ist, dass damit das Metallband zwar auf eine vorgegebene Breite gebracht werden kann, die Bandkanten dadurch aber nicht notwendigerweise parallel werden, sondern das Metallband (von oben betrachtet) einen bogen- beziehungsweise wellenförmigen Verlauf zeigen kann, insbesondere wenn es am Werkzeug vorbei bewegt wird. Dies ist der Tatsache geschuldet, dass die Bearbeitung mehr oder minder an einem Punkt erfolgt und das Metallband auf den Rollen oder Haspeln, um die es geführt ist, verläuft. Zudem können Verwölbungen im Metallband ebenfalls dazu führen, dass ein gefordertes Maß für die Bandbreite nicht eingehalten werden kann beziehungsweise dass die Bandkanten von einem parallelen Verlauf abweichen, insbesondere wenn die genannten Verwölbungen im Bereich der Bearbeitungsstelle zusammengedrückt werden, beispielsweise durch ein Rollenpaar. Eine Aufgabe der Erfindung ist es daher, ein verbessertes Verfahren und eine verbesserte Vorrichtung für das Herstellen eines Metallbands mit weitgehend parallelen Bandkanten anzugeben. Insbesondere sollen dadurch die oben angeführten Nachteile überwunden werden.

Die Aufgabe der Erfindung wird durch ein Verfahren mit den Merkmalen des Patentanspruchs 1 gelöst.

Die Aufgabe der Erfindung wird auch durch eine Vorrichtung mit den Merkmalen des Patentanspruchs 12 gelöst.

Durch die vorgeschlagenen Maßnahmen kann eine Abweichung der Bandkanten von einer parallelen Ausrichtung durch plastische Verformung korrigiert werden.

Insbesondere kann dies dadurch erfolgen, dass das Metallband eine Richtmaschine mit mehreren hintereinander angeordneten Richtrollen durchläuft und plastisch verformt wird. Demgemäß ist es von Vorteil, wenn die Einrichtung zur plastischen Umformung des Metallbands durch eine Richtmaschine mit mehreren Richtrollen gebildet ist, durch die das Metallband hindurch geführt werden kann.

In der Richtmaschine wird das Metallband durch eine Gruppe oberer und unterer Rollen geführt, so dass es eine Art Schlangenlinie durchläuft und in beide Richtungen durchgebogen wird. Die Durchbiegung wird hierbei so eingestellt, dass ein gerades Blech die Streckgrenze in beiden Biegungsrichtungen erreicht, aber nicht überschreitet. Gerade Abschnitte im Metallband werden daher nur kurzfristig verformt, federn nach dem Durchlauf durch die Richtmaschine jedoch in ihre ursprüngliche Lage zurück und bleiben somit gerade. Ungerade Blechabschnitte überschreiten jedoch die Streckgrenze und werden plastisch verformt und damit begradigt. Generell können beim Richten eine Welligkeit des Metallband, eine Wölbung desselben (Biegung um die Längsachse) sowie eine Biegung um die Hochachse respektive normal auf die Bandebene stehende Achse ("Säbelform") korrigiert werden.

Ein bogen- oder wellenförmig verformtes Metallband kann auch während eines Richtvorgangs durch Aufbringen einer Zugbelastung in Längsrichtung des Metallbands an einer Bogeninnenseite plastisch gelängt werden, um eine Bogen- beziehungsweise Säbelform oder Wellenform zu korrigieren.

In einer nicht erfindungsgemäßen Lösung wird ein Metallband zum Richten von einer Haspel abgehaspelt, durchläuft eine Richtmaschine und wird anschließend wieder aufgehaspelt. Wegen der beiden Haspeln ist das Verfahren auch unter dem Begriff "Coil-to-Coil-Richten" bekannt. Vorteilhaft ist der von einer entsprechenden Maschine beanspruchte Bauraum recht klein, insbesondere sehr kurz, da ein Großteil des Metallbands ja auf den Haspeln aufgewickelt ist.

Erfindungsgemäß erfolgt die Bearbeitung am endlosen Metallband. Demgemäß umfasst die Vorrichtung zwei Umlenkrollen zur Aufnahme des Metallbandes, von denen wenigstens eine angetrieben ist, und die an gegenüberliegenden Seiten der Richtmaschine angeordnet sind.

Durch die Bearbeitung des endlosen Metallbands kann eine vorhandene Säbelform leicht und reproduzierbar ermittelt werden, da das gesamte Metallband zugänglich ist (anders als zum Beispiel beim Coil-to-Coil-Richten, bei dem ein Großteil des Metallbands auf Haspeln aufgewickelt ist). Dickenunterschiede des Metallbands haben kaum Auswirkung auf die Bearbeitung desselben (beim Coil-to-Coil-Richten können Dickenunterschiede im Metallband dagegen zu einer Kegelform des aufgewickelten Metallbands und zu unterschiedlichen Zugkräften in den beiden Bandkanten führen). Durch das Richten des endlosen Bandes entfällt auch die beim Coil-to-Coil-Richten übliche S-förmige Umlenkung des Metallbandes, wodurch das Risiko von Riefen auf der Bandaußenseite verringert wird. Schließlich entsteht bei der Bearbeitung des endlosen Metallbands kein Abfall, oder es fällt nur ein ganz kleiner Teil des Metallbandes (etwa 0,5-1,0 m) als Abfall an. Der in der Regel sehr teure Grundwerkstoff wird daher sehr effizient genutzt. Beim Coil-to-Coil-Richten fallen dagegen längere Bandabschnitte als Abfall an, die für das Einspannen in die Haspeln benötigt werden, beziehungsweise aufgrund des Abstands der Richtmaschine zu den Haspeln nicht gerichtet werden können.

Durch die spezielle Bearbeitungsweise wirkt sich auch eine auf das Metallband aufgebrachte Zugspannung, um eine kürzere Bandkante zu längen, praktisch auf das gesamte Metallband aus. Dadurch wird das Metallband nicht wie beim Besäumen nur punktuell sondern auf gesamter Länge bearbeitet. Eine Bogen- oder Säbelform des Metallbands lässt sich auf diese Weise besonders gut korrigieren. Alternativ oder zusätzlich kann eine Säbelform aber natürlich auch in der Richtmaschine korrigiert werden.

Zur Aufbringung der genannten Zugspannung können die beiden Haspeln oder die beiden Umlenkrollen zueinander schräg gestellt werden, wobei die Zugspannung in der kürzeren Längskante größer wird als in der längeren Längskante. Demgemäß ist es auch von Vorteil, wenn die Vorrichtung zur Bearbeitung des Metallbands Mittel zum Schrägstellen der genannten Umlenkrollen aufweist. Denkbar ist aber auch, dass die Haspeln oder Umlenkrollen derart schräg gestellt werden, dass die Zugspannung in den beiden Längskanten beim Richtvorgang annähernd gleich sind. Insbesondere kann dadurch ein Verlaufens des Bands auf den Umlenkrollen vermieden werden.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn das Verfahren mit einem Säumvorgang gestartet wird. Dadurch kann ein Verzug, welcher sich aufgrund innerer Spannungen im Metallband und durch das Abtragen von Material in dessen Randbereich ergibt, bei einem anschließenden Richtvorgang korrigiert werden.

Günstig ist es auch, wenn das Verfahren mit einem Säumvorgang beendet wird. Auf diese Weise kann eine vorgegebene Breite des Metallbands bei geringer Toleranz erreicht werden.

Günstig ist es zudem, wenn wenigstens zwei Säumvorgänge und ein Richtvorgang im Wechsel durchgeführt werden. Dadurch werden die zu den beiden vorgenannten Varianten offenbarten Vorteile kombiniert.

Günstig ist es auch, wenn das Verfahren mit einem Richtvorgang gestartet wird. Dadurch werden Verwölbungen des Metallbands, welche einen anschließenden Säumvorgang beeinträchtigen können bereits vor dem Säumen korrigiert.

Günstig ist es auch, wenn das Verfahren mit einem Richtvorgang beendet wird. Auf diese Weise kann eine gerade Form des Metallbands mit hoher Genauigkeit erreicht werden.

Günstig ist es zudem, wenn wenigstens zwei Richtvorgänge und ein Säumvorgang im Wechsel durchgeführt werden. Dadurch werden die zu den beiden vorgenannten Varianten offenbarten Vorteile kombiniert.

Günstig ist es schließlich auch, wenn ein Säumvorgang und ein Richtvorgang paarweise ausgeführt werden. Dadurch können jene Vorteile kombiniert werden, die aus einem das Verfahren beginnenden Säumen und einem das Verfahren beendenden Richten entstehen, oder umgekehrt.

Günstig ist es auch, wenn
- das Metallband zu einem endlosen Band verschweißt wird,
- das Metallband in einer Richtmaschine gerichtet wird,
- das Metallband gesäumt wird und
- das Metallband anschließend aufgetrennt wird.
Auf diese Weise können auch offene (nicht endlose) Metallbänder durch Bearbeitung im endlosen Zustand hergestellt werden.

Vorteilhaft ist es, wenn das Richten in mehreren Durchläufen erfolgt. Auf diese Weise kann die Anzahl der Richtrollen bei verbessertem Ergebnis reduziert werden. Insbesondere betrifft dies die Bearbeitung am endlosen Metallband. In einer praktisch ausgeführten Richtmaschine werden beispielsweise nur 7 hintereinander angeordnete Richtrollen eingesetzt. Dadurch werden die auf das Metallband einwirkenden Zugkräfte und auch die zum Antrieb des Metallbands erforderliche Leistung reduziert.

Vorteilhaft ist es zudem, wenn ein Richten im Bereich der Schweißnaht unterbleibt. Auf diese Weise wird vermieden, dass die Schweißnaht hohen Belastungen ausgesetzt wird und möglicherweise bricht. Dadurch kann eine Beschädigung des Metallbands, so wie sie beim Hinunterfallen von den Umlenkrollen entstehen kann, vermieden werden.

Günstig ist es, wenn die auf das Metallband aufgebrachte Zugspannung im Bereich von 100 - 400 N/mm² liegt. Dadurch liegt die Zugspannung beim Richten in etwa im Bereich der Zugspannung, die im Betrieb auf einer Bandgießanlage auftritt. Dadurch kann das zukünftige Verhalten des Metallbands auf einer Bandgießanlage sehr gut abgeschätzt werden.

Günstig ist es auch, wenn ein ungerichteter Bandabschnitt entfernt und das Metallband wieder zu einem endlosen Band verschweißt wird. Auf diese Weise kann wieder ein endloses Metallband, beispielsweise für den Einsatz in einer Bandgießanlage, hergestellt werden.

Besonders vorteilhaft ist es darüber hinaus, wenn ein Durchhang des Metallbands auf beiden Längsseiten gemessen und verglichen wird und das Metallband in Folge auf der kürzeren Seite gelängt wird. Demgemäß ist es auch von Vorteil, wenn Vorrichtung zur Bearbeitung des Metallbands eine Messeinrichtung zum Messen des Durchhangs an den beiden Längskanten des Metallbands aufweist. Im Speziellen ist es auch von Vorteil, wenn die genannte Vorrichtung eine Steuerung/Regelung aufweist, welche dazu eingerichtet ist, die beiden Messergebnisse zu vergleichen und daraus eine Zustellung für die Richtmaschine zu berechnen und einzustellen. Auf diese Weise kann eine Bogenform beziehungsweise Säbelform sehr gezielt korrigiert werden. Dies gelingt besonders gut, wenn die Bearbeitung am endlosen Metallband erfolgt, da ein durch die Säbelform bedingter Längenunterschied zwischen den beiden Längskanten des Metallbands auf ganzer Länge zu Tragen kommt. Das heißt, dass schon eine geringe Längendifferenz zu einem deutlichen und damit vergleichsweise leicht messbaren Unterschied im Durchhang der beiden Längskanten führt. Die längere Längskante hängt ja generell und insbesondere beim vorteilhaften Entlasten des Metallbands etwas stärker durch als die kürzere Längskante.

Besonders vorteilhaft ist weiterhin ein Verfahren, bei dem
a) das Metallband in einem ersten Durchlauf gerichtet wird,
b) eine Abweichung von einer Idealform gemessen wird und daraus eine Zustellung für die Richtmaschine berechnet und eingestellt wird und
c) die Schritte a) und b) so lange wiederholt werden, biss sich die Ist-Form des Metallbands in einem zulässigen Bereich um die Idealform befindet.
Auf diese Weise kann die Qualität des Metallbands iterativ auf ein sehr hohes Niveau gesteigert werden. Insbesondere ist es dabei von Vorteil wenn das Metallband für die Messung im Schritt b) wenigstens geringfügig entlastet wird. Dadurch ist eine besonders genaue Messung der Abweichung des Metallbands von der Idealform möglich, da die Abweichungen durch eine im Metallband herrschende Zugspannung nicht oder nur im geringen Maße verfälscht werden. Das heißt, dass eine Welligkeit, eine Tonnenform sowie eine Säbelform im entlasteten Zustand des Metallbands oder bei wenig Belastung viel stärker zu Tage treten als dies bei hoher Zugspannung der Fall ist. Durch letztere werden Ungenauigkeiten "glattgezogen".

Günstig ist es, wenn die offenbarte Vorrichtung ein zweites, vom ersten Besäumwerkzeug beabstandetes Besäumwerkzeug umfasst, welches synchron mit dem ersten Besäumwerkzeug in der besagten Längsrichtung verfahrbar ist. Dadurch kann das Metallband in einem Arbeitsschritt auf eine bestimmte Breite besäumt werden.

Besonders vorteilhaft ist es, wenn
a) das Metallband auf einem Maschinentisch gehalten wird,
b) das Metallband auf einer Besäumlänge durch Längsverschiebung zweier voneinander beabstandeter Besäumwerkzeuge relativ zum feststehenden Metallband abschnittsweise besäumt wird,
c) das Metallband vom Maschinentisch gelöst wird,
d) das Metallband um längstens die Besäumlänge verschoben wird und die Schritte a) bis
d) wiederholt werden, wobei die beiden Besäumwerkzeuge in Schritt b) bevorzugt synchron verfahren werden.
Dadurch wird erreicht, dass das Metallband in einem Arbeitsschritt auf eine bestimmte Breite besäumt wird. Durch die synchrone Bewegung der Besäumwerkzeuge entstehen in dem Metallband während des Bearbeitungsvorganges keine Biegespannungen, wodurch sich eine besonders hohe Genauigkeit des Besäumungsvorganges ergibt. Zudem bleibt die Breite des Metallbandes selbst dann noch konstant, wenn die Haltevorrichtung einmal versagen sollte und das Metallband seitlich verrutscht. Deswegen kann das Metallband trotz eines solchen Missgeschicks unter Umständen noch weiterverwendet werden, wodurch sich eine hohe Kostenersparnis ergibt. Die hohe Genauigkeit beim Besäumen des Metallbandes wird unter anderem auch dadurch erreicht, dass das Besäumen nur abschnittsweise erfolgt und das Metallband während des eigentlichen Bearbeitungsvorganges festgehalten wird.

Vorteilhaft ist es weiterhin, wenn das zweite Besäumwerkzeug in einer Querrichtung verschiebbar ist. Insbesondere ist es von Vorteil, wenn das erste Besäumwerkzeug lediglich in der Längsrichtung verfahrbar ist und das zweite Besäumwerkzeug in der Längsrichtung verfahrbar und einer Querrichtung verschiebbar ist. Dadurch ist es mit geringem technischen Aufwand möglich, die Vorrichtung zum Besäumen verschieden breiter Metallbänder einzusetzen.

Günstig ist es, wenn als Besäumwerkzeug eines oder mehrere aus der Gruppe: Fräser, Schleifvorrichtung, Wasserstrahl, Laserstrahl und/oder Säge vorgesehen ist. Durch Nutzung an sich bekannter Bearbeitungstechniken kann die Besäumvorrichtung mit geringem technischen Aufwand in die Praxis umgesetzt werden. Durch gezielte Auswahl von spanenden Verfahren (Fräser, Säge), spanlosen Verfahren (Wasserstrahl, Laserstrahl) und schleifender Bearbeitung können die Eigenschaften des fertigen Metallbandes in weiten Grenzen gesteuert werden.

Vorteilhaft ist es in diesem Zusammenhang, wenn der Fräser als Kontur- beziehungsweise Profilfräser ausgebildet ist. Dadurch können die Seitenkanten des Metallbandes auf einfache Weise profiliert werden. Beispielsweise kann an der Oberkante und/oder der Unterkante des Metallbandes eine Fase oder eine Rundung hergestellt werden. Somit kann das Metallband in einem Arbeitsschritt auf eine bestimmte Breite gefräst und gleichzeitig dessen Katen gebrochen werden

Besonders vorteilhaft ist es weiterhin, wenn das erste und/oder zweite Besäumwerkzeug jeweils als Gruppe von in der Längsrichtung hintereinander angeordneten, unterschiedlichen Einzelwerkzeugen ausgeführt ist. Dadurch ist es möglich, das Metallband während eines Durchlaufs auf verschiedene Weise zu bearbeiten. Beispielsweise kann für ein Besäumwerkzeug ein Laserschneidekopf mit einem dahinter angeordneten Konturfräser kombiniert werden. Auf diese Weise wird das Metallband durch den Laser auf eine bestimmte Breite geschnitten, und anschließend werden dessen Kanten mit Hilfe des Fräsers endbearbeitet. Auf diese Weise kann die Standzeit der Fräser deutlich erhöht werden. Anstelle des Laserstrahls kann beispielsweise auch ein Wasserstrahl oder eine Säge eingesetzt werden, anstelle des Fräsers ein Schleifwerkzeug. Selbstverständlich ist es auch möglich, mehr als zwei Werkzeuge zu kombinieren. Beispielsweise können hintereinander ein Laserschneidkopf, ein Fräser und abschließend eine Schleifvorrichtung angeordnet werden.

Günstig ist es, wenn die Haltevorrichtung durch eine oder mehrere aus der Gruppe: Vakuumbeziehungsweise Sauggreifer, Elektromagnet und/oder mechanischer Greifer beziehungsweise mechanische Zange ausgebildet ist. Durch Nutzung an sich bekannter Haltetechniken kann die Besäumvorrichtung mit geringem technischen Aufwand in die Praxis umgesetzt werden. Durch gezielte Auswahl einer bestimmten Haltevorrichtung kann die Besäumvorrichtung leicht an verschiedene Materialien angepasst werden. Beispielsweise eignet sich ein Elektromagnet besonders für ferromagnetische Werkstoffe, ein Sauggreifer besonders für glatte Metallbänder, usw.

Vorteilhaft ist es, wenn die Haltevorrichtung mehrteilig ausgeführt ist und die Teile in den seitlichen Randbereichen des Maschinentisches angeordnet sind. Dadurch wird das Metallband nahe der Bearbeitungsstelle fixiert, wodurch eine hohe Fertigungsgenauigkeit erzielt werden kann.

Vorteilhaft ist es weiterhin, wenn ein Teil der Haltevorrichtungen an einer Seite des Maschinentisches fix angeordnet ist und ein anderer Teil in einer Querrichtung verschiebbar ist. Auf diese Weise können die Haltevorrichtungen leicht auf verschiedene Breiten des Metallbandes eingestellt werden.

Besonders vorteilhaft ist es in diesem Zusammenhang, wenn das zweite Besäumwerkzeug hinsichtlich seiner Querverschiebung mit dem verschiebbaren Teil der Haltevorrichtungen gekoppelt ist. Dadurch werden das zweite Besäumwerkzeug und die diesem zugeordneten Haltevorrichtung synchron verschoben, weswegen die Vorrichtung besonders schnell auf verschiedene Breiten des Metallbandes eingestellt werden kann.

Vorteilhaft ist es bei einem Verfahren zum Besäumen eines Metallbandes, wenn wenigstens eines der beiden Besäumwerkzeuge in einem Endbereich des Metallbandes in einer Querrichtung verfahren wird. Auf diese Weise kann der Endbereich des Metallbandes exakt rechtwinkelig zu den Längsseiten bearbeitet werden. Dadurch läuft das Band nach dem Zusammenfügen der Enden besonders gerade.

Vorteilhaft ist es auch, wenn die Verfahrensschritte a) bis d) lediglich in einem Mittenbereich des Metallbandes ausgeführt werden. Bei dieser Variante der Erfindung wird das Metallband in dessen Endbereich noch nicht auf die endgültige Breite besäumt, um eine Ausgleichsmöglichkeit für das Fügen der beiden Enden des Metallbandes zu belassen.

Besonders vorteilhaft ist es in diesem Zusammenhang, wenn die Enden des Metallbandes zusammengefügt und der dadurch entstehende Verbindungsbereich auf im Wesentlichen dieselbe Breite wie der Mittenbereich besäumt wird. Auf diese Weise wird das durch den Fügevorgang entstehende endlose Band durchgehend auf dieselbe Breite besäumt. Weil vor dem Fügevorgang eine Ausgleichsmöglichkeit belassen wurde, ist das solcherart entstandene Metallband besonders genau beziehungsweise läuft besonders gerade.

An dieser Stelle wird angemerkt, dass sich die zum Herstellungsverfahren offenbarten Varianten und die daraus resultierenden Vorteile gleichermaßen auf die offenbarte Vorrichtung beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: eine schematisch dargestellte Anordnung zum Herstellen eines Metallbands mit zwei Haspeln in Seitenansicht;
- Fig. 2: die Anordnung aus Fig. 1 in Draufsicht;
- Fig. 3: ähnlich wie Fig. 1, jedoch mit längs geführten Besäumwerkzeugen;
- Fig. 4: die Anordnung aus Fig. 3 in Draufsicht;
- Fig. 5: ähnlich wie Fig. 3, jedoch mit beidseitig angeordneten Antriebswalzen;
- Fig. 6: die Anordnung aus Fig. 5 in Draufsicht;
- Fig. 7: eine schematisch dargestellte Anordnung zum Herstellen eines endlosen Metallbands in Seitenansicht;
- Fig. 8: die Anordnung aus Fig. 7 in Draufsicht;
- Fig. 9: ähnlich wie Fig. 7, jedoch mit einer am Untertrum des Metallbands angeordneten Besäumeinrichtung;
- Fig. 10: die Anordnung aus Fig. 9 in Draufsicht;
- Fig. 11: eine weitere schematisch dargestellte Anordnung zum Herstellen eines Metallbandes in Seitenansicht mit durchhängendem Metallband und einer Steuerung/Regelung zur Erreichung einer Idealform;
- Fig. 12: die Anordnung aus Fig. 11 in Draufsicht mit zusätzlich schräg gestellten Umlenkrollen;
- Fig. 13: eine weitere schematisch dargestellte Anordnung zum Richten eines Metallbandes in Seitenansicht mit einem Laserscanner zur Erfassung der Abweichung des Metallbands von der Idealform und
- Fig. 14: die Anordnung aus Fig. 13 in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

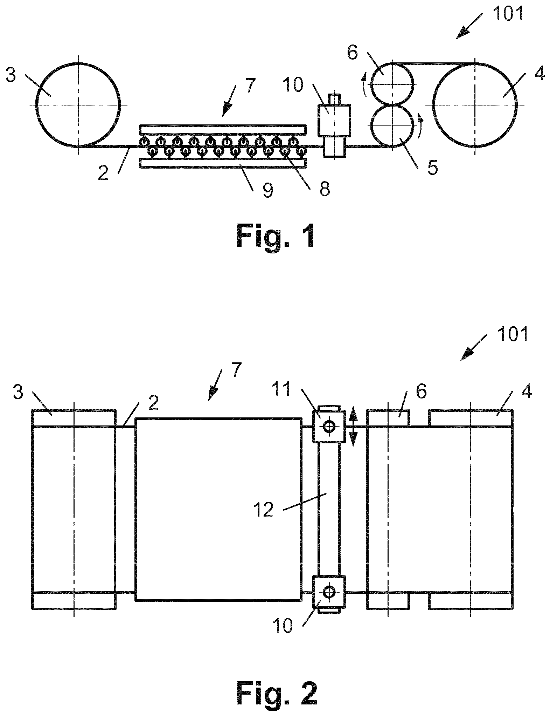

Die Figuren 1 und 2 zeigen eine Anordnung 101 zum Herstellen eines Metallbands 2 mit weitgehend parallelen Bandkanten, die Fig. 1 in Seitenansicht, die Fig. 2 in Draufsicht. Die Anordnung 101 umfasst zwei Haspeln 3 und 4, zwei Antriebswalzen 5 und 6, sowie eine Richtmaschine 7. Die Richtmaschine 7 wiederum umfasst mehrere hintereinander angeordnete und quer zum Metallband 2 verstellbare Rollen 8, die auf einem Maschinenrahmen 9 angeordnet sind.

Weiterhin umfasst die Vorrichtung 101 ein erstes Besäumwerkzeug 10 und ein zweites, vom ersten Besäumwerkzeug 10 beabstandetes Besäumwerkzeug 11. Die beiden Besäumwerkzeuge 10 und 11 sind auf einer Brücke 12 angeordnet, Vorzugsweise ist das zweite Besäumwerkzeug 11 auf der Brücke 12 einer Querrichtung (siehe den Doppelpfeil im Grundriss) verschiebbar. Das erste Besäumwerkzeug 10 kann fix auf der Brücke 12 montiert sein oder ebenfalls auf dieser in Querrichtung verschiebbar gelagert sein. Durch diese Maßnahmen ist es möglich, die Vorrichtung 101 durch Verschieben des ersten und/oder zweiten Besäumwerkzeugs 10, 11 zum Besäumen verschieden breiter Metallbänder 2 einzusetzen.

Die Funktion der gezeigten Anordnung 101 ist nun wie folgt, wobei davon ausgegangen wird, dass das Metallband 2 zu Beginn vollständig auf der Haspel 3 aufgehaspelt/aufgewickelt ist:
In einem ersten Schritt wird das Metallband 2 durch die Richtmaschine 7 hindurch und um die Antriebswalzen 5 und 6 herum zu der Haspel 4 gefädelt und dort eingespannt. Zum eigentlichen Richtvorgang werden die Rollen 8 zum Metallband 2 hin zugestellt und das Metallband 2 in der angegebenen Richtung durch die Richtmaschine 7 hindurch gezogen. Da die Haspel 4 alleine in der Regel nicht die dazu nötige Zugspannung aufbringen kann, wird das Metallband 2 zum überwiegenden Teil von den Antriebswalzen 5 und 6 angetrieben.

Das Metallband 2 durchläuft die Richtmaschine 7 aufgrund der zugestellten Rollen 8 schlangenlinienförmig, was aber in der Fig. 1 der einfacheren Darstellbarkeit halber nicht im Detail gezeigt ist. Die Durchbiegung des Metallbands 2 wird hierbei so eingestellt, dass ein gerades Blech die Streckgrenze in beiden Biegungsrichtungen erreicht, aber nicht überschreitet. Gerade Abschnitte im Metallband 2 werden daher nur kurzfristig verformt, federn nach dem Durchlauf durch die Richtmaschine 7 jedoch in ihre ursprüngliche Lage zurück und bleiben somit gerade. Ungerade Blechabschnitte überschreiten jedoch die Streckgrenze und werden plastisch verformt und damit begradigt. Generell können beim Richten eine Welligkeit des Metallbands 2, eine Wölbung desselben (Biegung um die Längsachse) sowie eine Biegung um die Hochachse respektive normal auf die Bandebene stehende Achse ("Säbelform") korrigiert werden. Wegen der beiden Haspeln 3, 4 ist das Verfahren auch unter dem Begriff "Coil-to-Coil-Richten" bekannt.

Gleich nach dem Durchlaufen der Richtmaschine 7 kann das Metallband 2 besäumt werden. Denkbar ist aber auch, dass das Besäumen bei deaktivierter Richtmaschine 7 also bei zurückgezogenen Rollen 8 erfolgt. Das Besäumen kann in der angegeben Bewegungsrichtung des Metallbands 2 erfolgen oder auch gegenläufig dazu. Dies deswegen, weil für das Besäumen nicht so hohe Zugkräfte nötig sind wie für das Richten und für das Besäumen die Antriebskraft der Haspel 3 in aller Regel ausreichend ist.

In dem in den Figuren 1 und 2 gezeigten Beispielen sind zwei Besäumwerkzeuge 10, 11 vorgesehen. Selbstverständlich ist es auch möglich, dass nur ein erstes Besäumwerkzeug 10 vorhanden ist und das Metallband 2 demzufolge nur auf einer Seite besäumt wird. Eine beidseitige Besäumung des Metallbands 2 kann beispielsweise durch Umspannen des Metallbands 2 oder des ersten Besäumwerkzeugs 10 erfolgen oder auch dadurch, dass das erste Besäumwerkzeug 10 auf der Brücke 12 auf die andere Kante des Metallbands 2 verschoben wird.

Als Besäumwerkzeug 10 und 11 können beispielsweise eines oder mehrere aus der Gruppe: Fräser, Schleifvorrichtung, Wasserstrahl, Laserstrahl und/oder Säge vorgesehen sein. Im Fall eines Fräsers ist es von Vorteil, wenn dieser als Kontur- beziehungsweise Profilfräser ausgebildet ist. Dadurch können die Seitenkanten des Metallbandes 2 auf einfache Weise profiliert werden. Beispielsweise kann an der Oberkante und/oder der Unterkante des Metallbandes 2 eine Fase oder eine Rundung hergestellt werden. Somit kann das Metallband 2 in einem Arbeitsschritt auf eine bestimmte Breite gefräst und gleichzeitig dessen Katen gebrochen werden

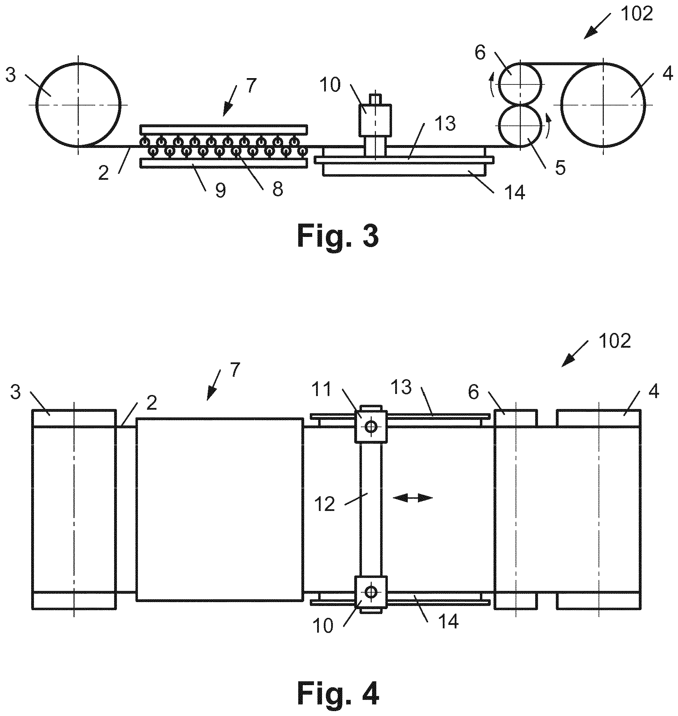

Die Figuren 3 und 4 zeigen eine weitere Ausführungsform einer Anordnung 102 zum Herstellen eines Metallbands 2 mit weitgehend parallelen Bandkanten, die der in den Figuren 1 und 2 dargestellten Vorrichtung 101 sehr ähnlich ist. Im Unterschied dazu können die Besäumwerkzeuge 10 und 11 respektive die Brücke 12 nun entlang einer Führung 13 in Längsrichtung des Metallbands 2 verfahren werden. Zusätzlich ist auch ein Maschinentisch 14 mit einer Haltevorrichtung (in Fig. 3 und 4 nicht explizit dargestellt) zum Halten des Metallbandes 2 vorgesehen.

Vorzugsweise ist die Haltevorrichtung durch eine oder mehrere aus der Gruppe: Vakuum- beziehungsweise Sauggreifer, Elektromagnet und/oder mechanischer Greifer beziehungsweise mechanische Zange ausgebildet. Beispielsweise können auf dem Maschinentisch 14 und in der Fig. 3 unter dem Metallband 2 Sauggreifer angeordnet sein, welche das Metallband 2 auf dem Maschinentisch 14 fixieren. Vorteilhaft wird dabei die Oberfläche des Metallbandes 2 nicht zerkratzt oder dergleichen. In einer vorteilhaften Variante der Vorrichtung 102 ist die Haltevorrichtung mehrteilig ausgeführt, wobei die Teile in den seitlichen Randbereichen des Maschinentisches 14, also im Bereich der Führungen 13 angeordnet sind. Dadurch wird das Metallband 2 nahe der Bearbeitungsstelle fixiert, wodurch eine hohe Fertigungsgenauigkeit erzielt werden kann. Anstelle des Maschinentisches 14 kann beispielsweise auch ein Stützrolle vorgesehen werden, auf der das Metallband 2 aufliegt, oder es wird ein Rollenpaar vorgesehen, durch welche das Metallband 2 hindurch geführt ist.

Beim Besäumen wird das Metallband 2 In einem ersten Schritt a) durch Betätigung der Haltevorrichtung (also zum Beispiel durch Betätigung von Sauggreifern) auf dem Maschinentisch 14 fixiert. In einem weiteren Schritt b) wird das Metallband 2 auf einer Besäumlänge abschnittsweise besäumt. Dazu werden die Besäumwerkzeuge 10 und 11 durch Verfahren der Brücke 12 relativ zum feststehenden Metallband 2 bewegt. Die Besäumlänge entspricht dabei der Länge der Führung 13 respektive dem Verfahrweg der Brücke 12. Wenn das Metallband 2 auf der Besäumlänge besäumt ist, wird die Haltevorrichtung in einen Schritt c) gelöst, wodurch das Metallband 2 vom Maschinentisch 14 gelöst wird. In einem Schritt d) wird das Metallband 2 schließlich um längstens die Besäumlänge weiterbewegt. Dazu werden in diesem Beispiel die Haspeln 3 und 4 respektive die Antriebsrollen 5 und 6 gedreht. Durch Wiederholen der Schritte a) bis d) kann das Metallband 2 auf seiner gesamten Länge besäumt werden.

Durch die vorgeschlagenen Maßnahmen wird eine hohe Genauigkeit beim Besäumen des Metallbandes 2 erreicht, denn das Besäumen erfolgt nur abschnittsweise und das Metallband 2 wird während des eigentlichen Bearbeitungsvorganges festgehalten. Dadurch ergibt sich ein bedeutender Vorteil gegenüber Verfahren, bei dem das Metallband 2 (etwa wie in diesem Beispiel über eine Haspel) kontinuierlich an einem fix auf einem Maschinentisch 14 montierten Besäumwerkzeug 10, 11 vorbeigezogen wird.

Besonders vorteilhaft ist es wenn die Besäumwerkzeuge 10 und 11 in Schritt b) synchron verfahren werden, so wie dies in dem gezeigten Beispiel der Fall ist. Dadurch wird das Metallband 2 in einem Arbeitsschritt auf eine bestimmte Breite besäumt. Im Übrigen gilt das zu Fig. 1 und 2 Gesagte.

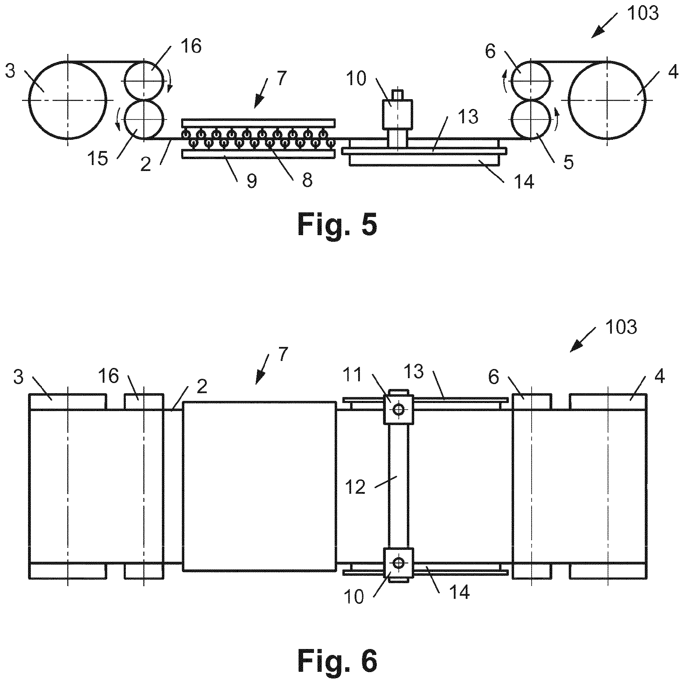

Die Figuren 5 und 6 zeigen eine weitere nicht erfindungsgemäße Ausführungsform einer Anordnung 103 zum Herstellen eines Metallbands 2, die der in den Figuren 3 und 4 dargestellten Vorrichtung 102 sehr ähnlich ist. Im Unterschied dazu sind zwei weitere Antriebswalzen 15 und 16 vorgesehen, welche insbesondere das Richten des Metallbands 2 in beide Richtungen ermöglicht. Das zu den Figuren 1 bis 4 Gesagte gilt sinngemäß.

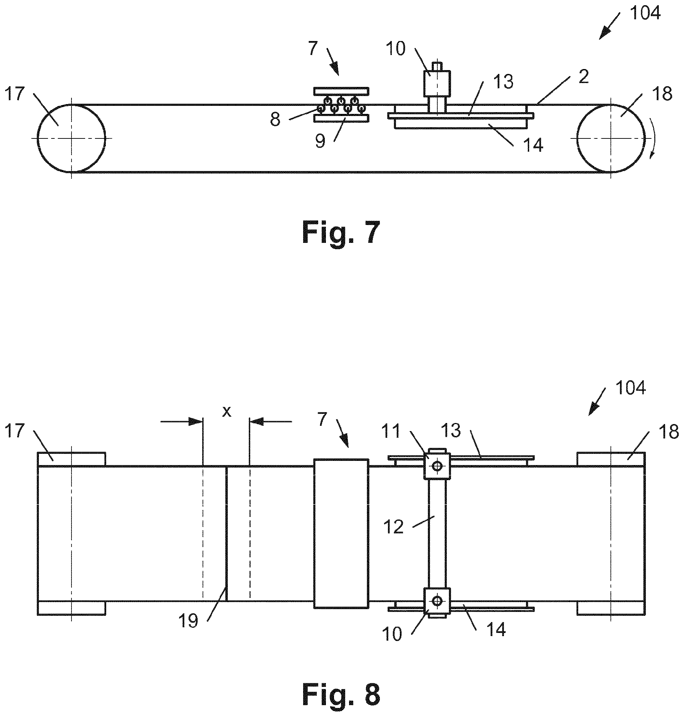

Die Figuren 7 und 8 zeigen nun eine erfindungsgemäße Ausführungsform einer Anordnung 104 zum Herstellen eines Metallbands 2 mit weitgehend parallelen Bandkanten. Bei dieser ist das endlose Metallband 2 um zwei Rollen 17 und 18 geführt, von denen wenigstens eine angetrieben ist. Die Richtmaschine 7 entspricht in ihrem Aufbau im Wesentlichen der auch schon in den Figuren 1 bis 6 dargestellten Richtmaschine 7, ist aber etwas kürzer. Der Grund liegt darin, dass das Metallband 2 auf sehr einfache Weise in mehreren Durchläufen gerichtet werden kann, wofür vorteilhaft geringere Zug- beziehungsweise Antriebskräfte erforderlich sind. Die Besäumeinrichtung entspricht in ihrem Aufbau den schon in den Figuren 3 bis 6 dargestellten Ausführungsformen. Das hierzu Gesagte gilt somit sinngemäß auch für die in Besäumeinrichtung der Anordnung 104. Selbstverständlich könnte aber auch eine Besäumeinrichtung nach Art der in den Figuren 1 und 2 dargestellten Vorrichtung eingesetzt werden. Zudem ist auch vorstellbar, dass die Führungen 13 über fast die gesamte Länge der Anordnung 104 laufen, wenn die Richtmaschine 7 in den Fig. 7 und 8 etwas nach links gerückt wird.

Ein Verfahren zum Bearbeiten eines Metallbands 2 kann nun folgende Schritte umfassen:
- Verschweißen des Metallbands 2 zu einem endlosen Band entlang einer Schweißnaht 19,
- Richten des Metallbands 2 in der Richtmaschine 7
- Besäumen des Metallbands 2 und
- gegebenenfalls Auftrennen des Metallbands 2.

Prinzipiell kann das Metallband 2 auch schon zu einem endlosen Band verschweißt angeliefert werden und auch in diesem Zustand wieder weiterverarbeitet werden. Das erfindungsgemäße Verfahren weist dann nur den Richtvorgang und den Besäumvorgang als solchen auf.

Wie aus den Fig. 1, 3 und 5 leicht erkennbar ist fällt beim Richtvorgang nach dem Coil-to-Coil-Verfahren ein relativ langes Stück des Metallbands 2 als Abfall an. Konkret betrifft dies den für das Einspannen des Metallbands 2 in die Haspel 4 benötigten Teil, sowie den um die Antriebswalzen 5, 6 gewundenen und bis hinter die Richtmaschine 7 reichenden Teil. Soll das Metallband 2 nicht vollständig von der Haspel 3 abgewickelt werden, um zum Beispiel Beschädigungen desselben beim Herabfallen zu vermeiden, so muss auch der in der Haspel 3 eingespannte und bis zum Beginn der Richtmaschine 7 ragende Teil entsorgt werden. Bei der Bearbeitung des endlosen Metallbands 2 fällt im Idealfall dagegen überhaupt kein Abfall an.

Vorteilhaft liegt die während des Richtvorgangs auf das Metallband 2 aufgebrachte Zugspannung im Bereich von 100 - 400 N/mm². Dadurch liegt die Zugspannung beim Richten im Bereich der Zugspannung, die im Betrieb auf einer Bandgießanlage auftritt. Deswegen kann das zukünftige Verhalten des Metallbands 2 auf einer Bandgießanlage sehr gut abgeschätzt werden.

In einer weiteren vorteilhaften Variante unterbleibt ein Richten im Bereich der Schweißnaht 19. Insbesondere werden die Rollen 8 dazu kurzfristig vom Metallband 2 abgehoben, bis die Schweißnaht 19 die Richtmaschine 7 passiert hat. Auf diese Weise wird vermieden, dass die Schweißnaht 19 zu hohen Belastungen ausgesetzt wird und möglicherweise bricht.

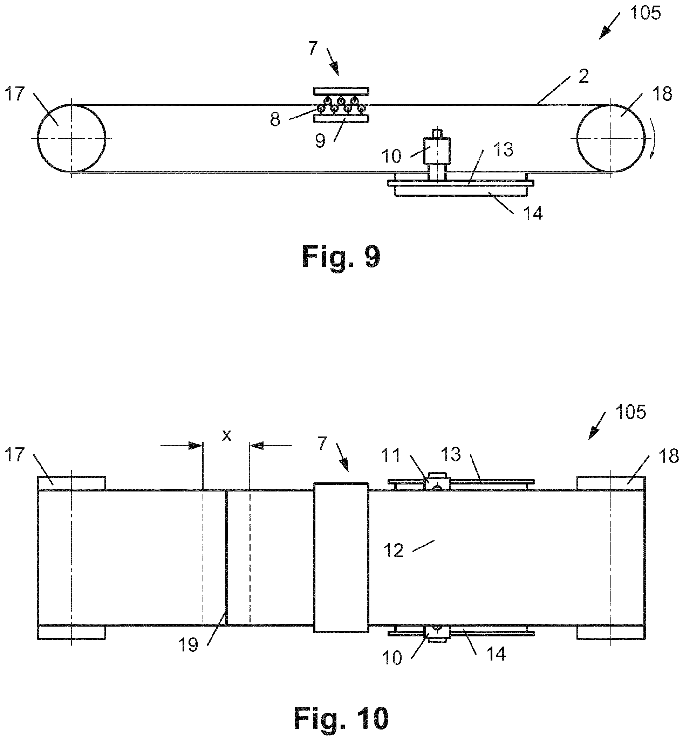

Günstig ist es weiterhin, wenn ein ungerichteter Bandabschnitt entfernt und das Metallband 2 wieder zu einem endlosen Band verschweißt wird. In der Fig. 10 ist der zu entfernende Abschnitt mit "x" bezeichnet. Beispielsweise kann ein solcher Abschnitt x entstehen, wenn das Metallband 2 nach dem Richtvorgang oder nach einem Durchlauf eines Richtvorgangs angehalten wird. Durch die angegebene Weise kann aber wieder ein endloses und hochqualitatives Metallband 2, beispielsweise für den Einsatz in einer Bandgießanlage, hergestellt werden.

Die Figuren 9 und 10 zeigen eine weitere Anordnung 105 zum Herstellen eines Metallbands 2, die der in den Figuren 7 und 8 dargestellten Vorrichtung 104 sehr ähnlich ist. Im Unterschied dazu ist die Besäumvorrichtung nun aber am Untertrum des Metallbands 2 angeordnet. Das "Obertrum" bezeichnet generell den oberen, tragenden Teil des angetriebenen Metallbands 2, wohingegen das "Untertrum" den unteren, nicht tragenden Teil des Metallbands 2 bezeichnet. Vorteilhaft können die Führungen 13 bei dieser Bauart noch länger ausgebildet sein als bei der Anordnung 104. Selbstverständlich könnten auch die Besäumvorrichtung und die Richtmaschine 7 beide am Untertrum angeordnet sein. Alternativ wäre es auch vorstellbar, dass die Richtmaschine 7 am Untertrum und die Besäumvorrichtung am Obertrum angeordnet sind.

In einer weiteren vorteilhaften Ausführungsform wird ein Durchhang des Metallbands 2 auf beiden Längsseiten 20, 21 gemessen und verglichen, und in Folge wird das Metallband 2 auf der kürzeren Seite 20, 21 gelängt.

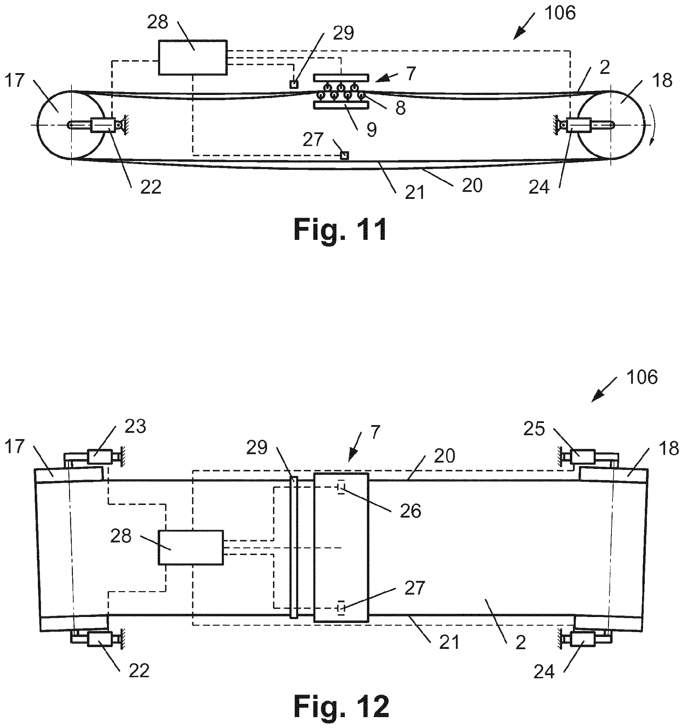

Die Figuren 11 und 12 zeigen ein Beispiel, welches diesen Vorgang im Detail zeigt. Die Figuren 11 und 12 zeigen eine Vorrichtung 106, die der Vorrichtung 104 aus den Figuren 7 und 8 beziehungsweise der Vorrichtung 105 aus den Figuren 9 und 10 ähnlich ist. Das Metallband 2 weist jedoch nun eine ausgeprägte Säbelform auf, also eine Biegung um eine Achse normal zur Ebene des Metallbands 2 (Anmerkung: der besseren Darstellbarkeit halber ist die Besäumvorrichtung in den Figuren 11 und 12 nicht dargestellt).

Die Fig. 11 zeigt die Anordnung 106 in einem Zustand, in dem das Metallband 2 etwas entlastet wurde. Dazu werden die beiden Umlenkrollen 17, 18 oder auch nur eine davon zur Mitte hin bewegt. Das Metallband 2 hängt dann etwas nach unten durch. Für das folgende Beispiel wird angenommen dass die Längskante 20 etwas länger ist als die Längskante 21. Das Metallband 2 ist daher säbelförmig verbogen. Wenn die Umlenkrollen 17, 18 parallel zueinander ausgerichtet sind, hängen die beiden Längskanten 20, 21 beim Entlasten des Metallbands 2 unterschiedlich stark durch. Im konkreten Fall hängt die etwas längere Längskante 20 etwas stärker durch als die Längskante 21, so wie dies in der Fig. 11 dargestellt ist.

Vorteilhaft ist es nun, wenn die Umlenkrollen 17, 18 derart schräg gestellt werden, dass die Zugspannung in den beiden Längskanten 20, 21 beim Richtvorgang annähernd gleich sind. Auf diese Weise kann ein Verlaufens des Metallbands 2 vermieden werden. Die Umlenkrollen 17, 18 stehen dann in der in Fig. 12 dargestellten Position.

Denkbar ist aber auch, dass die Umlenkrollen 17, 18 derart schräg gestellt werden, dass die Zugspannung in der kürzeren Längskante 21 größer ist als in der längeren Längskante 20 und in Folge das Metallband 2 auf der kürzeren Seite 21 gelängt wird. Auf diese Weise kann eine Säbelform des Metallbands 2 gerichtet werden. Vorteilhaft wirkt die aufgebrachte Zugspannung praktisch auf der gesamten Länge des Metallbands 2. Daher kann eine Säbelform durch Schrägstellen der Umlenkrollen 17, 18 mit Hilfe der Vorrichtung 106 gut korrigiert werden.

Vorteilhaft kann eine Säbelform bei der Vorrichtung 106 gemäß den Figuren 11 und 12 auch mit hoher Genauigkeit gemessen werden. Dies deswegen, weil ein Längenunterschied zwischen den beiden Längskanten 20, 21 auf der gesamten Länge des Metallbands 2 zu Tragen kommt.

Die Mittel zum Schrägstellen der Umlenkrollen 17, 18 können beispielsweise durch Hydraulikzylinder oder Spindelantriebe gebildet sein. In den Figuren 11 und 12 sind die Umlenkrollen 17, 18 beispielhaft mit solchen Hydraulikzylindern 22..25 ausgestattet, die einerseits die zum Richten erforderliche Zugkraft aufbringen, andererseits aber auch eine Schrägstellung der Umlenkrolle 17, 18 bewirken können. In dem vorgestellten Beispiel können beide Umlenkrollen 17, 18 verstellt werden. Im Grunde reicht es jedoch aus, wenn eine der beiden Umlenkrollen 17, 18 verstellbar ausgeführt ist.

Zudem sind in den Figuren 10 und 11 beispielhafte Sensoren 26, 27 dargestellt, welche einen Durchhang des Metallbands 2 an den beiden Längskanten 20, 21 und insbesondere eine Differenz zwischen den beiden Längskanten 20, 21 ermitteln können. Beispielsweise können die Sensoren 20, 21 nach einem optischen Prinzip, nach dem Ultraschallprinzip oder induktiv arbeiten. Mit Hilfe einer Steuerung/Regelung 28 werden die beiden Messergebnisse verglichen, beziehungsweise wird daraus eine Zustellung für die Richtmaschine 7 sowie gegebenenfalls für die Hydraulikzylinder 22..25 berechnet und eingestellt.

Oben wurde beschrieben, dass ein Durchhang bei wenigstens geringfügig entlastetem Metallband 2 gemessen wird. Prinzipiell hängt das Metallband 2 aber immer durch, auch bei angelegter Zugspannung. Daher kann die Messung des Durchhangs auch im belasteten Zustand erfolgen. Weiterhin wurde erläutert, dass eine Säbelform durch Schrägstellen der Rollen 17, 18 korrigiert werden kann. Dies ist aber nicht die einzige Möglichkeit. Alternativ oder zusätzlich kann eine Säbelform natürlich auch in der Richtmaschine 7 korrigiert werden.

Neben den Sensoren 26, 27 zum Messen des Durchhangs der beiden Längskanten 20, 21 kann auch ein Sensor 29 zur Messung der Welligkeit des Metallbands 2 beziehungsweise zur Ermittlung einer Tonnenform respektive Wölbung desselben (Biegung um die Längsachse) vorgesehen und mit der Steuerung 28 verbunden sein.

Insbesondere kann
a) das Metallband 2 in einem ersten Durchlauf gerichtet werden,
b) eine Abweichung von einer Idealform gemessen und daraus eine Zustellung für die Richtmaschine 7 berechnet und eingestellt werden und
c) es können die Schritte a) und b) so lange wiederholt werden, bis sich die Ist-Form des Metallbands 2 in einem zulässigen Bereich um die Idealform befindet.
Auf diese Weise kann die Qualität des Metallbands 2 iterativ auf ein sehr hohes Niveau gesteigert werden. Vorzugsweise wird das Metallband 2 für die Messung im Schritt b) entlastet. Dadurch ist eine besonders genaue Messung der Abweichung des Metallbands 2 von der Idealform möglich. Dies deswegen, weil die Zugspannung, welche ein glatteres Metallband suggeriert als es im unbelasteten Zustand vorliegt, nicht oder nur im geringen Maße vorliegt.

Generell können die Sensoren 26, 27, 29 zum Messen eines Durchhangs und zum Messen einer Welligkeit beziehungsweise einer Tonnenform als getrennte Sensoren vorliegen, oder es sind die Funktionen in einem Sensor integriert. Beispielsweise könnte mit einem Laserscanner gleichzeitig die Welligkeit, die Tonnenform und auch eine Säbelform (direkt oder über den Umweg des Durchhangs) gemessen und in die Steuerung 28 eingespeist werden.

Vorteilhaft ist es auch, wenn das erste und/oder zweite Besäumwerkzeug 10, 11 in einem Endbereich des Metallbandes 2 in der Querrichtung verfahren werden kann/können. Auf diese Weise kann der Endbereich des Metallbandes 2 exakt rechtwinkelig zu den Längsseiten bearbeitet werden. Durch Zusammenfügen der Enden, insbesondere durch Verschweißen, kann auf diese Weise ein besonders genaues endloses Metallband hergestellt werden. Vorteilhaft ist es in diesem Zusammenhang, wenn die die Endbereich des Metallbandes 2 vorerst nicht besäumt werden. Dadurch wird eine Ausgleichsmöglichkeit für das Fügen der beiden Enden des Metallbandes 2 geschaffen. Erst wenn die Enden des Metallbandes 2 zusammengefügt wurden, wird der dadurch entstehende Verbindungsbereich auf im Wesentlichen dieselbe Breite wie der Mittenbereich besäumt. Ein solches Metallband 2 ist besonders genau. Das Besäumen des Verbindungsbereiches kann händisch erfolgen oder aber auch auf dem Maschinentisch 14, wobei die Haspeln 3 und 4 aber nicht mehr benötigt werden.

Bist jetzt wurde davon ausgegangen, dass die beiden Besäumwerkzeuge 10 und 11 als Einzelwerkzeuge ausgeführt sind. Das erste und/oder zweite Besäumwerkzeug 10, 11 kann aber auch jeweils als Gruppe von in der Längsrichtung hintereinander angeordneten, unterschiedlichen Einzelwerkzeugen ausgeführt sein. Dadurch ist es möglich, das Metallband 2 während eines einzigen Durchlaufs auf verschiedene Weise zu bearbeiten. Beispielsweise kann für ein Besäumwerkzeug 10, 11 ein Laserschneidekopf mit einem dahinter angeordneten Konturfräser kombiniert werden. Auf diese Weise wird das Metallband 2 durch den Laser auf eine bestimmte Breite geschnitten, und anschließend werden dessen Kanten mit Hilfe des Fräsers endbearbeitet. Dadurch kann die Standzeit der Fräser deutlich erhöht werden. Selbstverständlich ist es auch möglich, mehr als zwei Werkzeuge zu kombinieren. Beispielsweise können hintereinander ein Laserschneidkopf, ein Fräser und abschließend eine Schleifvorrichtung angeordnet werden.

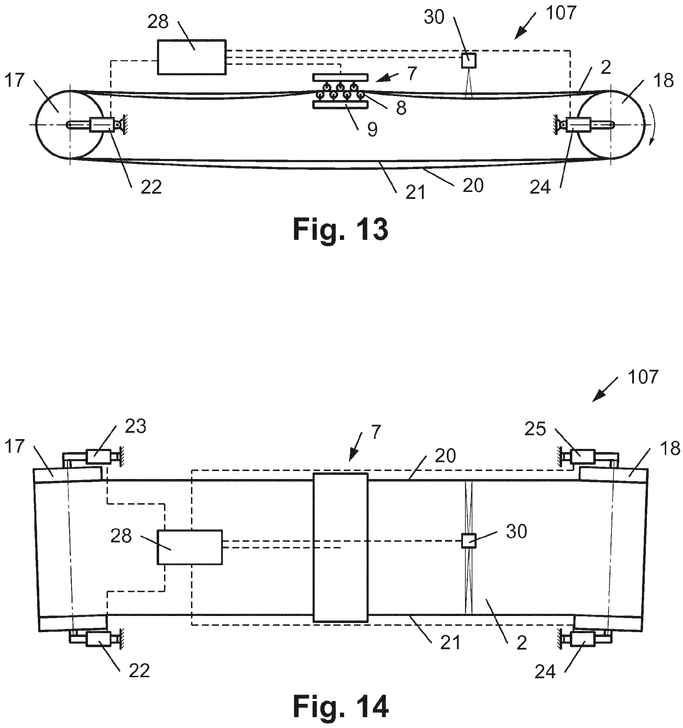

Die Figuren 13 und 14 zeigen eine weitere Ausführungsform einer Anordnung 107, die der in den Figuren 11 und 12 dargestellten Vorrichtung 106 sehr ähnlich ist. Im Unterschied dazu ist aber ein Laserscanner 30 vorgesehen. Der Laserscanner 30 tastet dabei vorzugsweise die gesamte Breite des Metallbands 2 ab, wodurch durch das erfasste Oberflächenprofil gleichzeitig eine Welligkeit, eine Tonnenform und die Form der Bandkanten 20, 21, insbesondere eine Bogen- oder Säbelform, bestimmt werden können. Im Speziellen kann mit dem Laserscanner 30 (grundsätzlich aber auch mit anderen Sensoren) ein Verlaufen des Metallbands 2 festgestellt werden. Mit Hilfe dieser Daten können die Besäumwerkzeuge 10, 11 entsprechend nachgeführt werden, sodass trotz dem Verlaufen des Metallbands 2 im Besäumschritt ein Metallband 2 mit konstanter Breite und parallelen Bandkanten 20, 21 hergestellt werden kann.

Denkbar ist auch, dass die Form des Metallbands 2 nach dem Richten und/oder Besäumen ermittelt wird und daraus eine Einstellung für den nächsten Bearbeitungsschritt abgeleitet wird. Beispielsweise lässt eine Verformung des Metallbands 2 nach dem Besäumen, das heißt nach dem zumindest teilweise Abtragen der Bandkanten 20, 21, Rückschlüsse auf die inneren Spannungen im Metallband 2 zu. Aus dieser Erkenntnis kann wiederum eine Zustellung für einen anschließenden Richtvorgang ermittelt werden.

Generell entstehen durch die Kombination eines Richtvorgangs und eines Säumvorgangs Metallbänder 2 mit weitestgehend parallelen Bandkanten 20, 21. Beispielsweise kann das Verfahren mit einem Säumvorgang gestartet und/oder beendet werden. Denkbar ist aber auch. dass das Verfahren mit einem Richtvorgang gestartet und/oder beendet wird. Beispielsweise kann das Richten und Besäumen paarweise ausgeführt werden. Denkbar ist aber auch, dass wenigstens zwei Säumvorgänge und ein Richtvorgang oder wenigstens zwei Richtvorgänge und ein Säumvorgang im Wechsel durchgeführt werden.

An dieser Stelle wird angemerkt, dass die Verwendung einer Vorrichtung mit kombinierter Richtmaschine 7 und Besäumeinrichtung 10..14 zwar von Vorteil ist, das Richten und Besäumen grundsätzlich aber auch auf verschiedenen Maschinen durchgeführt werden kann. Das Metallband 2 wird dann zwischen den einzelnen Bearbeitungsschritten entsprechend umgespannt, zum Beispiel in dem eine Haspel 3, 4, auf der das Metallband 2 aufgewickelt ist, von einer Richtmaschine entnommen und in eine Besäummaschine eingespannt wird oder umgekehrt. Das zu den Figuren 1 bis 14 Gesagte gilt dabei sinngemäß. Beispielsweise kann eine Richtvorrichtung nach Art der Figuren 1 und 2 ausgeführt sein, wobei die Besäumeinrichtung 10..12 gedanklich weggelassen wird. Ebenso kann eine Besäumvorrichtung nach Art der Figuren 1 und 2 ausgeführt sein, wobei die Richtmaschine 7 gedanklich weggelassen wird und so weiter.

Die Erfindung ist in den beigefügten Ansprüche definiert.

Insbesondere wird auch festgehalten, dass die dargestellten Vorrichtungen in der Realität auch mehr oder weniger Bestandteile als dargestellt umfassen können und in den Figuren bisweilen stark vereinfacht dargestellt sind.

Der Ordnung halber sei abschließend darauf hingewiesen, dass die dargestellten Vorrichtungen sowie ihre Bestandteile zum besseren Verständnis ihres Aufbaus darüber hinaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 101..106: Vorrichtung zum Richten/Besäumen eines Metallbands
- 2: Metallband
- 3: Haspel
- 4: Haspel
- 5: Antriebswalze

- 6: Antriebswalze
- 7: Richtmaschine
- 8: Richtrollen
- 9: Maschinenrahmen
- 10: erstes Besäumwerkzeug

- 11: zweites Besäumwerkzeug
- 12: Brücke/Portal
- 13: Führung/Schiene
- 14: Maschinentisch
- 15: Antriebswalze

- 16: Antriebswalze
- 17: Umlenkrolle
- 18: Umlenkrolle
- 19: Schweißnaht
- 20: Längskante Metallband

- 21: Längskante Metallband
- 22..25: Hydraulikzylinder
- 26: Sensor zur Messung des Durchhangs des Metallbands links
- 27: Sensor zur Messung des Durchhangs des Metallbands rechts
- 28: Steuerung/Regelung

- 29: Sensor zur Messung der Welligkeit und Tonnenform des Metallbands
- 30: Laserscanner
- x: ungerichteter Bandabschnitt

## Patentansprüche

1. Verfahren zum Herstellen eines Metallbands (2) mit weitgehend parallelen Bandkanten (20, 21), bei dem das Metallband (2) gesäumt wird, indem zumindest ein Teil der Bandkanten (20, 21) des Metallbands (2) abgetragen wird, und bei dem das Metallband (2) zusätzlich während eines Richtvorgangs plastisch umgeformt wird,
**dadurch gekennzeichnet, dass**
die Bearbeitung am endlosen Metallband (2) erfolgt, wobei das Metallband (2) für den Bearbeitungsvorgang zu einem endlosen Band verschweißt zwischen zumindest zwei Umlenkrollen (17, 18) gespannt wird und insbesondere von zumindest einer Umlenkrolle (17, 18) angetrieben durch eine Richtmaschine (7) gezogen respektive an einem Besäumwerkzeug (10, 11) vorbei bewegt wird.

2. Verfahren nach Anspruch 1, **dadurch gekennzeichnet, dass** das Metallband (2) eine Richtmaschine (7) mit mehreren hintereinander angeordneten Richtrollen (8) durchläuft und plastisch verformt wird.

3. Verfahren nach Anspruch 1 oder 2, **dadurch gekennzeichnet, dass** ein bogen- oder wellenförmig verformtes Metallband (2) während eines Richtvorgangs durch Aufbringen einer Zugbelastung in Längsrichtung des Metallbands (2) an einer Bogeninnenseite plastisch gelängt wird.

4. Verfahren nach einem der Ansprüche 1 bis 3, **dadurch gekennzeichnet, dass** dieses mit einem Säumvorgang gestartet und/oder beendet wird.

5. Verfahren nach einem der Ansprüche 1 bis 4, **dadurch gekennzeichnet, dass** dieses mit einem Richtvorgang gestartet und/oder beendet wird.

6. Verfahren nach einem der Ansprüche 1 bis 5, **dadurch gekennzeichnet, dass** wenigstens zwei Säumvorgänge und ein Richtvorgang oder zwei Richtvorgänge und ein Säumvorgang im Wechsel durchgeführt werden.

7. Verfahren nach einem der Ansprüche 1 bis 6, **dadurch gekennzeichnet, dass** ein Säumvorgang und ein Richtvorgang paarweise ausgeführt werden.

8. Verfahren nach einem der Ansprüche 1 bis 7, **dadurch gekennzeichnet, dass** ein Richten im Bereich einer Schweißnaht (19) unterbleibt.

9. Verfahren nach einem der Ansprüche 1 bis 8, **dadurch gekennzeichnet, dass** die beim Richten auf das Metallband (2) aufgebrachte Zugspannung im Bereich von 100 - 400 N/mm² liegt.

10. Verfahren nach einem der Ansprüche 1 bis 9, **dadurch gekennzeichnet, dass** ein ungerichteter Bandabschnitt (x) entfernt und das Metallband (2) wieder zu einem endlosen Band verschweißt wird.

11. Verfahren nach einem der Ansprüche 1 bis 10, **dadurch gekennzeichnet, dass**
a) das Metallband (2) auf einem Maschinentisch (14) gehalten wird,
b) das Metallband (2) durch Längsverschiebung zweier voneinander beabstandeter Besäumwerkzeuge (4, 5) relativ zum feststehenden Metallband (2) auf einer Besäumlänge abschnittsweise besäumt wird,
c) das Metallband (2) vom Maschinentisch (3) gelöst wird und
d) das Metallband (2) um längstens die Besäumlänge verschoben wird und die Schritte a) bis d) wiederholt werden.

12. Vorrichtung (101.. 106) zum Herstellen eines endlosen Metallbands (2) mit weitgehend parallelen Bandkanten (20, 21) nach einem der Ansprüche 1 bis 11, umfassend
- ein Besäumwerkzeug (10, 11),
- einen Antrieb (3..6, 15..18) zur Erzeugung einer Relativbewegung zwischen dem Besäumwerkzeug (10, 11) und dem Metallband (2) in Richtung der Längsachse des Metallbands (2) und
- eine Einrichtung (7, 22..25) zur plastischen Umformung des Metallbands (2),
**dadurch gekennzeichnet, dass**
die Vorrichtung (101..106) zur Bearbeitung an einem zu einem endlosen Band verschweißten Metallband (2) ausgebildet ist und zwei Umlenkrollen (17, 18) zur Aufnahme des endlosen Metallbandes (2) aufweist, von denen wenigstens eine angetrieben ist, und die an gegenüberliegenden Seiten der Richtmaschine (7) angeordnet sind.

13. Vorrichtung (101..106) nach Anspruch 12, **dadurch gekennzeichnet, dass** die Einrichtung zur plastischen Umformung des Metallbands (2) durch eine Richtmaschine (7) mit mehreren Richtrollen (8) gebildet ist, durch die das Metallband (2) hindurch geführt werden kann.

14. Vorrichtung (101..106) nach einem der Ansprüche 12 oder 13, **dadurch gekennzeichnet, dass** als Besäumwerkzeug (10, 11) eines oder mehrere aus der Gruppe: Fräser, Schleifvorrichtung, Wasserstrahl, Laserstrahl und/oder Säge vorgesehen ist.

15. Vorrichtung (101..106) nach Anspruch 14, **dadurch gekennzeichnet, dass** der Fräser als Kontur- beziehungsweise Profilfräser ausgebildet ist.

16. Vorrichtung (101..106) nach einem der Ansprüche 12 bis 15, **dadurch gekennzeichnet, dass** das erste und/oder zweite Besäumwerkzeug (10, 11) jeweils als Gruppe von in der Längsrichtung hintereinander angeordneten, unterschiedlichen Einzelwerkzeugen ausgeführt ist.

## Claims

1. A method for producing a metal belt (2) with substantially parallel belt edges (20, 21), in which the metal belt (2) is trimmed by at least a part of the belt edges (20, 21) of the metal belt (2) being removed, and in which the metal belt (2) is additionally plastically reshaped during a straightening operation,
**characterized in that**
processing is carried out on the endless metal belt (2), wherein the metal belt (2) that is welded together to form an endless belt is spanned between at least two deflection rollers (17, 18) for the processing operation and, in particular, driven by at least one deflection roller (17, 18) is pulled through a straightening machine (7) and moved past a trimming tool (10, 11).

2. The method according to claim 1, **characterized in that** the metal belt (2) runs through a straightening machine (7) with several straightening rollers (8) arranged behind one another and is plastically reshaped.

3. The method according to claim 1 or 2, **characterized in that** a metal belt (2) with an arc-shaped or wave-shaped deformation is plastically elongated during a straightening operation by application of a tensile load in the longitudinal direction of the metal belt (2) on an inside of the arc.

4. The method according to one of claims 1 to 3, **characterized in that** it is started and/or ended with a trimming operation.

5. The method according to one of claims 1 to 4, **characterized in that** it is started and/or ended with a straightening operation.

6. The method according to one of claims 1 to 5, **characterized in that** at least two trimming operations and one straightening operation or two straightening operations and one trimming operation are carried out in turns.

7. The method according to one of claims 1 to 6, **characterized in that** a trimming operation and a straightening operation are carried out pairwise.

8. The method according to one of claims 1 to 7, **characterized in that** straightening is omitted in the region of a weld seam (19).

9. The method according to one of claims 1 to 8, **characterized in that** the tensile load applied onto the metal belt (2) during straightening is in the range of 100 - 400 N/mm².

10. The method according to one of claims 1 to 9, **characterized in that** a non-straightened belt section (x) is removed and the metal belt (2) is welded back together to form an endless belt.

11. The method according to one of claims 1 to 10, **characterized in that**
a) the metal belt (2) is held on a machine table (14),
b) the metal belt (2) is sectionally trimmed over a trimming length by longitudinal displacement of two trimming tools (4, 5), which are spaced apart from one another, relative to the fixed metal belt (2),
c) the metal belt (2) is released from the machine table (3) and
d) the metal belt (2) is displaced by the trimming length at most and steps a) to d) are repeated.

12. A device (101..106) for producing an endless metal belt (2) with substantially parallel belt edges (20, 21) according to one of claims 1 to 11, comprising
- a trimming tool (10, 11),
- a drive (3..6, 15..18) for generating a relative movement between the trimming tool (10, 11) and the metal belt (2) in the direction of the longitudinal axis of the metal belt (2) and
- an apparatus (7, 22..25) for plastically reshaping the metal belt (2),
**characterized in that**
the device (101..106) is designed for processing on a metal belt (2) being welded together to form an endless belt and comprises two deflection rollers (17, 18) for holding the endless metal belt (2), at least one of which is driven, and which are arranged on opposite sides of the straightening machine (7).

13. The device (101..106) according to claim 12, **characterized in that** the apparatus for plastically reshaping the metal belt (2) is formed by a straightening machine (7) with several straightening rollers (8), through which the metal belt (2) can be guided.

14. The device (101..106) according to one of claims 12 or 13, **characterized in that** one or several ones from the group of: cutter, grinding device, water jet, laser beam and/or saw is provided as trimming tool (10, 11).

15. The device (101..106) according to claim 14, **characterized in that** the cutter is formed as a contour cutter and/or profile cutter.

16. The device (101..106) according to one of claims 12 to 15, **characterized in that** the first and/or second trimming tool (10, 11) each is designed as a group of different individual tools arranged behind one another in the longitudinal direction.

## Revendications

1. Procédé de fabrication d'une bande métallique (2) aux rives (20, 21) largement parallèles, dans lequel la bande métallique (2) est rognée par le fait qu'au moins une partie des rives (20, 21) de la bande métallique (2) est enlevée, et dans lequel la bande métallique (2) est en plus mise en forme par déformation plastique pendant un processus de dressage,
**caractérisé en ce que**
l'usinage s'effectue sur la bande métallique (2) sans fin, la bande métallique (2) étant, pour le processus d'usinage, tendue entre au moins deux poulies de renvoi en étant soudée en une bande sans fin, et étant en particulier tirée à travers une machine à dresser (7) en étant entraînée par au moins une poulie de renvoi (17, 18) ou respectivement déplacée pour passer devant un outil de rognage (10, 11).

2. Procédé selon la revendication 1, **caractérisé en ce que** la bande métallique (2) traverse une machine à dresser (7) avec plusieurs rouleaux à dresser (8) disposés les uns derrière les autres et est mise en forme par déformation plastique.

3. Procédé selon la revendication 1 ou 2, **caractérisé en ce qu'**une bande métallique (2) déformée en forme d'arc ou d'ondulation est, pendant un processus de dressage, allongée plastiquement par l'application d'une contrainte de traction dans la direction longitudinale de la bande métallique (2) sur un côté intérieur de l'arc.

4. Procédé selon l'une des revendications 1 à 3, **caractérisé en ce que** celui-ci est commencé et/ou terminé avec un processus de rognage.

5. Procédé selon l'une des revendications 1 à 4, **caractérisé en ce que** celui-ci est commencé et/ou terminé avec un processus de dressage.

6. Procédé selon l'une des revendications 1 à 5, **caractérisé en ce qu'**au moins deux processus de rognage et un processus de dressage ou deux processus de dressage et un processus de rognage sont effectués de façon alternée.

7. Procédé selon l'une des revendications 1 à 6, **caractérisé en ce qu'**un processus de rognage et un processus de dressage sont effectués par paires.

8. Procédé selon l'une des revendications 1 à 7, **caractérisé en ce qu'**il n'y a pas de dressage dans la zone d'un cordon de soudure (19).

9. Procédé selon l'une des revendications 1 à 8, **caractérisé en ce que** la contrainte de traction appliquée sur la bande métallique (2) lors du dressage se situe dans la plage de 100 - 400 N/mm².

10. Procédé selon l'une des revendications 1 à 9, **caractérisé en ce qu'**un tronçon de bande (x) non dressé est éloigné, et la bande métallique (2) est de nouveau soudée en une bande sans fin.

11. Procédé selon l'une des revendications 1 à 10, **caractérisé en ce que**
a) la bande métallique (2) est retenue sur une table de machine (14),
b) la bande métallique (2) est rognée par tronçons sur une longueur de rognage par un déplacement longitudinal de deux outils de rognage (4, 5) espacés l'un de l'autre relativement à la bande métallique (2) stationnaire,
c) la bande métallique (2) est détachée de la table de machine (3) et
d) la bande métallique (2) est déplacée sur une distance correspondant au plus à la longueur de rognage, et les étapes a) à d) sont répétés.

12. Dispositif (101... 106) de fabrication d'une bande métallique (2) sans fin aux rives (20, 21) largement parallèles selon l'une des revendications 1 à 11, comprenant
- un outil de rognage (10, 11),
- un entraînement (3...6, 15...18) destiné à la production d'un mouvement relatif entre l'outil de rognage (10, 11) et la bande métallique (2) en direction de l'axe longitudinal de la bande métallique (2) et
- un équipement (7, 22...25) destiné à la mise en forme par déformation plastique de la bande métallique (2),
**caractérisé en ce que**
le dispositif (101...106) est constitué pour l'usinage sur une bande métallique (2) soudée en une bande sans fin et comporte deux poulies de renvoi (17, 18) destinées à la réception de la bande métallique (2) sans fin, dont au moins l'une est entraînée, et qui sont disposées sur des côtés opposés de la machine à dresser (7).

13. Dispositif (101...106) selon la revendication 12, **caractérisé en ce que** l'équipement destiné à la mise en forme par déformation plastique de la bande métallique (2) est formé d'une machine à dresser (7) avec plusieurs rouleaux à dresser (8) à travers laquelle la bande métallique (2) peut être guidée.

14. Dispositif (101...106) selon l'une des revendications 12 ou 13, **caractérisé en ce que**, en tant qu'outil de rognage (10, 11), il est prévu un ou plusieurs outils de rognage parmi le groupe : fraise, dispositif de meulage, jet d'eau, rayon laser et/ou scie.

15. Dispositif (101...106) selon la revendication 14, **caractérisé en ce que** la fraise est constituée en tant que fraise à contourner ou respectivement à profiler.

16. Dispositif (101...106) selon l'une des revendications 12 à 15, **caractérisé en ce que** le premier et/ou le deuxième outil de rognage (10, 11) est respectivement réalisé en tant que groupe d'outils individuels différents disposés les uns derrière les autres dans la direction longitudinale.
